# EUROPEAN PATENT APPLICATION

(11) **EP 4 676 106 A1**
(43) Date of publication of application: **07.01.2026**
(21) Application number: 25186714.9
(22) Date of filing: 01.07.2025
(51) Int. Cl.: H04W 8/00, H04W 48/16, H04W 84/12

(54) **COMMUNICATION APPARATUS, CONTROL METHOD, AND PROGRAM**

(30) Priority: 02.07.2024 JP 2024106883
(71) Applicant: CANON KABUSHIKI KAISHA, Tokyo 146-8501 (JP)
(72) Inventor: YOSHIKAWA, Yuki, Tokyo, 146-8501 (JP)
(74) Representative: Canon Europe Limited

(57) **Abstract**

A communication apparatus that communicates a wireless frame compliant with a Wi-Fi Direct (WFD) standard, performs (S1002) a first detection of another communication apparatus according to a first method of searching for a partner apparatus for communication using a first wireless frame defined by the WFD standard, performs (S1003) a second detection of another communication apparatus according to a second method of searching for the partner apparatus using a second wireless frame that is defined by the WFD standard and is not used in the first method, determines (S1004) whether the same apparatus has been detected in the first detection and the second detection by analyzing the first wireless frame and the second wireless frame, outputs (S1006) information indicating the apparatus as a single apparatus in a case where the same apparatus has been detected in the first detection and the second detection.

## Description

### TECHNICAL FIELD

The present disclosure relates to a wireless communication apparatus, and connection destination selection technique that may be used in a wireless communication apparatus.

### BACKGROUND

With the recent increases in the amount of data communicated, the development of communication technologies such as wireless local area networks (LANs) and the like is progressing. The Institute of Electrical and Electronics Engineers (IEEE) 802.11 series standard is known as a major wireless LAN communication standard. The IEEE 802.11 series standard includes standards such as IEEE 802.11a/b/g/n/ac/ax and the like. For example, the IEEE 802.11ax standard uses Orthogonal Frequency Division Multiple Access (OFDMA) to standardize techniques for improving communication speeds under congested conditions in addition to providing high peak throughput of up to 9.6 gigabits per second (Gbps).

On the other hand, the Wi-Fi (registered trademark) Alliance, which formulates authentication programs for wireless LAN devices, has developed the "Wi-Fi Direct" (WFD) standard, which specifies procedures for establishing communication links between wireless LAN STAs by exchanging communication parameters without going through an AP. "AP", "STA", and "WFD" stand for "access point", "station", and "Wi-Fi Direct", respectively. In WFD, STAs traditionally discover other STAs using a Probe Request frame and a Probe Response (see Japanese Patent Laid-Open No. 2017-063310). In addition to this, WFD is currently considering adopting a procedure for searching for a partner apparatus using the Service Discovery Frame (SDF) employed in Wi-Fi Aware.

### SUMMARY

As described above, a WFD-compliant STA can search for another STA through a first method, which uses the conventional Probe Request and Probe Response, and a second method, which uses the SDF. Here, it is conceivable that another STA is present which can be a candidate for a communication partner capable of using both the first and second methods. In this case, if another STA is discovered through both the first method and the second method, that STA may be treated as two separate devices, which can make it difficult for the user of the partner apparatus that establishes the connection to select the device.

The present disclosure provides a technique that enables a user of a station compliant with a Wi-Fi Direct standard to efficiently select another station of a communication partner.

The present disclosure in its first aspect provides a communication apparatus as specified in claim 1. Optional features are specified in claims 2 to 11.

The present disclosure in its second aspect provides a control method as specified in claim 12.

The present disclosure in its third aspect provides a program as specified in claim 13.

Features of the present disclosure will become apparent from the following description of embodiments with reference to the attached drawings. The following description of embodiments are described by way of example.

### BRIEF DESCRIPTION OF THE DRAWINGS

FIG. 1 is a diagram illustrating an example of the configuration of a wireless communication system.
FIG. 2 is a diagram illustrating an example of the hardware configuration of a communication apparatus.
FIG. 3 is a diagram illustrating an example of the functional configuration of the communication apparatus.
FIG. 4 is a diagram illustrating an example of the flow of processing when detecting a partner apparatus using WFD.
FIG. 5 is a diagram illustrating an example of the configuration of a Service Discovery Frame.
FIG. 6 is a diagram illustrating Sub-Attributes.
FIG. 7 is a diagram illustrating an example of the configuration of a Probe Request frame, a Probe Response frame, and a Beacon frame.
FIG. 8 is a diagram illustrating P2P IE.
FIG. 9 is a diagram illustrating WCE IE.
FIG. 10 is a diagram illustrating an example of the flow of processing performed by the communication apparatus.
FIG. 11 is a diagram illustrating an example of the flow of connection processing by WFD R2.
FIG. 12 is a diagram illustrating an example of the flow of connection processing by WFD R1.
FIG. 13 is a diagram illustrating an example of a screen displayed by the communication apparatus.
FIG. 14 is a diagram illustrating an example of a screen displayed by the communication apparatus.
FIG. 15 is a diagram illustrating an example of a screen displayed by the communication apparatus.
FIG. 16 is a diagram illustrating an example of a screen displayed by the communication apparatus.
FIG. 17 is a diagram illustrating an example of a screen displayed by the communication apparatus.
FIG. 18 is a diagram illustrating an example of a screen displayed by the communication apparatus.
FIG. 19 is a diagram illustrating an example of a screen displayed by the communication apparatus.
FIG. 20 is a diagram illustrating an example of a screen displayed by the communication apparatus.
FIG. 21 is a diagram illustrating an example of a screen displayed by the communication apparatus.
FIG. 22 is a diagram illustrating an example of a screen displayed by the communication apparatus.

### DESCRIPTION OF THE EMBODIMENTS

Hereinafter, embodiments will be described in detail with reference to the attached drawings. Note, the following embodiments are not intended to limit the scope of the claims. Each of the embodiments of the present invention described below can be implemented solely or as a combination of a plurality of the embodiments or features whereof or where the combination of elements or features from individual embodiments is beneficial. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### System Configuration

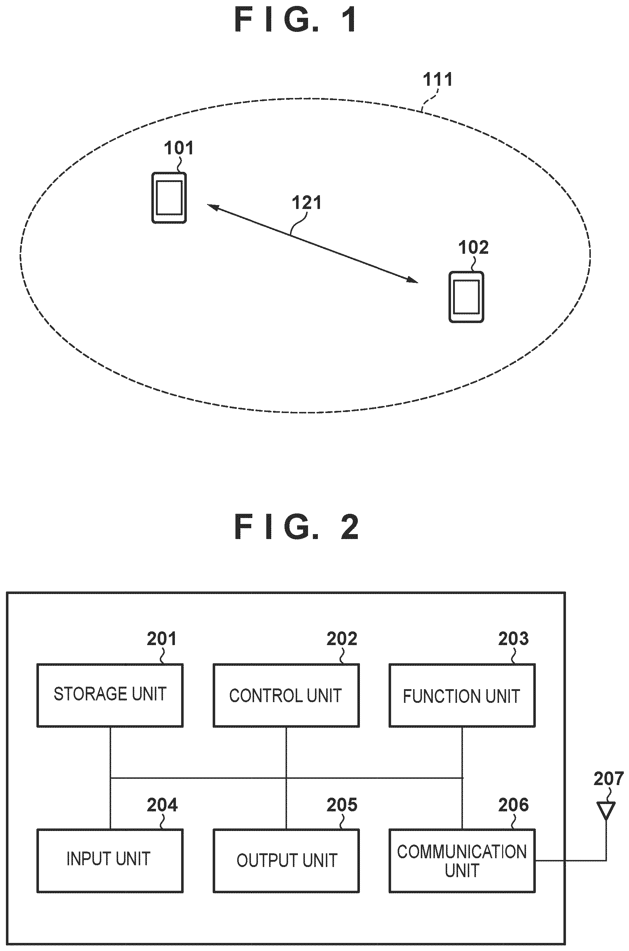

FIG. 1 illustrates an example of the configuration of a network according to the present embodiment. This wireless communication system is configured including two or more communication apparatuses. For example, the wireless communication system can be configured including a communication apparatus 101 and a communication apparatus 102. Note that in the present embodiment, when it is not necessary to distinguish between the communication apparatus 101 and the communication apparatus 102, the apparatuses may be collectively referred to simply as "communication apparatuses". Furthermore, even when "communication apparatus 101" and "communication apparatus 102" are mentioned, the roles thereof can be reversed, with the communication apparatus 101 having the functions of the communication apparatus 102 and vice-versa. Where methods and/or features of a particular communication apparatus are being described, any communication apparatus that is not the particular communication apparatus may be referred to as an "other communication apparatus" or "another communication apparatus". The communication apparatus may be a wireless communication apparatus capable of wireless communication compliant with an IEEE 802.11 series standard including, for example, the IEEE 802.11bn standard. The present embodiment assumes that the communication apparatus can function as a station (STA) compliant with the IEEE 802.11 series standard. Note that the communication apparatus may be capable of functioning as an access point (AP) compliant with the IEEE 802.11 series standard. "IEEE" is an acronym for "Institute of Electrical and Electronics Engineers". The IEEE 802.11bn standard can also be called the UHR standard. "UHR" is an acronym of "Ultra High Reliability". The IEEE 802.11 series standard can include the IEEE 802.11 a/b/g/n/ac/ax/be standards. These standards can be called "legacy standards". In other words, the communication apparatus can support one or more legacy standards in addition to the IEEE 802.11bn standard. Furthermore, the communication apparatus may support one or more of the legacy standards without supporting the IEEE 802.11bn standard. A network 111 is constructed in an area encompassing a range including the communication apparatus 101 and the communication apparatus 102, and the communication apparatus 101 and the communication apparatus 102 can communicate over the network 111. Within the network 111, the communication apparatus 102 can receive signals sent from the communication apparatus 101 at a predetermined power level or greater, and the communication apparatus 101 can receive signals transmitted from the communication apparatus 102 at a predetermined power level or greater. Note that the communication apparatuses may support other communication standards such as Bluetooth (registered trademark), NFC, UWB, ZigBee, MBOA, or the like in addition to the IEEE 802.11 series standard. "UWB" is an acronym for "Ultra-Wide Band" and "MBOA" is an acronym for "Multi Band OFDM Alliance". "NFC" is an acronym for "Near Field Communication". UWB includes wireless USB, wireless 1394, WiNET, and the like. The communication apparatuses may also support a communication standard for wired communication, such as wired LAN.

According to the present embodiment, the communication apparatus 101 and the communication apparatus 102 have a function for discovering each other and establishing a communication link in accordance with the Wi-Fi Direct (WFD) standard. The communication apparatus 101 and the communication apparatus 102 can operate such that, for example, one functions as a Group Owner (GO) and the other as a Client (CL) in the procedure for establishing a connection compliant with the WFD standard. According to the present embodiment, the communication apparatus 101 functions as the GO, providing communication parameters to the communication apparatus 102 and constructing the network 111. The communication apparatus 102 functions as the CL, receiving communication parameters from the communication apparatus 101 and joining the network 111 constructed by the communication apparatus 101. Note that the communication apparatus 102 may be the GO, and the communication apparatus 101 may be the CL. The parameters may also be provided to the GO from the CL through a bootstrapping procedure (described later).

To date, WFD has used a sequence in which one STA receives a Probe Request frame and a Probe Response frame sent by another STA (partner apparatus) to discover the other STA to serve as the communication partner. Note that when the Probe Request frame is received from the other STA, the one STA recognizes the presence of the other STA and returns a Probe Response frame. Furthermore, by sending a Probe Request frame and receiving a Probe Response frame as a reply, the one STA can recognize the other STA that returned that Probe Response frame. In addition to this first procedure used in the past, a second procedure for searching for a partner apparatus using the Service Discovery Frame (SDF) employed in Wi-Fi Aware is being considered in WFD. According to the present embodiment the communication apparatus can use these first and second procedures to search for other STAs in the vicinity. In the following, the first procedure will be referred to as "WFD R1" or "R1", and the second procedure will be referred to as "WFD R2" or "R2".

Although FIG. 1 illustrates a state in which two communication apparatuses (the communication apparatus 101 and the communication apparatus 102) are present, three or more communication apparatuses may be present. In this case, the three or more communication apparatuses may be directly connected to one another, or one communication apparatus may function as a hub and relay communication among the other communication apparatuses. For example, the network 111 may be constructed on the basis of the communication parameters provided by the communication apparatus 101 serving as the GO, and a plurality of communication apparatuses serving as CLs may then join the network 111. In this case, the communication apparatus 101 can operate as a temporary AP. For example, the communication apparatus 101 can notify the other communication apparatuses of the communication parameters by providing a beacon.

In the present embodiment, the communication apparatus may be any electronic device, such as a smartphone, a tablet, a mobile telephone, a PC, a video camera, a headset, a printer, a display, or the like, but is not limited thereto. The communication apparatus may be an information processing apparatus such as a wireless chip capable of wireless communication compliant with the IEEE 802.11bn standard.

The communication apparatus can communicate using wireless signals in frequency bands such as the 2.4 GHz band, the 3.6 GHz band, the 5 GHz band, the 6 GHz band, as well as millimeter wave bands such as the 45 GHz band and the 60 GHz band, and the like. The frequency bands used by the communication apparatus are not limited thereto, however, and may be a sub-1 GHz band or the like, for example. The communication apparatus can also communicate using bandwidths of 20 MHz, 40 MHz, 80 MHz, 160 MHz, 320 MHz, 540 MHz, 640 MHz, 1080 MHz, and 2160 MHz. The bandwidths used by the communication apparatus are not limited thereto, however, and may be 240 MHz, 4 MHz, or the like, for example. Note that the IEEE 802.11 series standard defines a frequency channel that uses a bandwidth of 20 MHz as a basic channel in frequency bands such as 2.4 GHz, 5 GHz, and 6 GHz. This standard also defines a plurality of channels that can be used in each of the 2.4 GHz, 5 GHz, and 6 GHz frequency bands. Furthermore, in this standard, one channel can be used in combination with other adjacent channels. One channel, or a collection of channels formed by two or more channels adjacent to each other, may be referred to here as a "communication link" (or simply "link"). In other words, one link formed by two channels, each having a bandwidth of 20 MHz, uses a bandwidth of 40 MHz. Note that the communication apparatus may be a STA multi-link device (MLD) or an AP MLD that supports multi-link, in which communication is performed by establishing a plurality of links at the same time. Note that FIG. 1 illustrates a state in which one wireless link (a link 121) is established between the communication apparatus 101 and the communication apparatus 102.

### Device Configuration

FIG. 2 illustrates an example of the hardware configuration of the communication apparatus according to the present embodiment. The communication apparatus includes, for example, a storage unit 201, a control unit 202, a function unit 203, an input unit 204, an output unit 205, a communication unit 206, and an antenna 207. Although only one antenna 207 is illustrated in FIG. 2, the communication apparatus may include a plurality of antennas 207.

The storage unit 201 is configured including at least one memory such as a ROM or a RAM, and stores various information such as computer programs for performing various operations (described later), and communication parameters for wireless communication. "ROM" and "RAM" are acronyms for "Read-Only Memory" and "Random Access Memory", respectively. Note that in addition to memory such as a ROM, a RAM, and the like, storage media such as flexible disks, hard disks, optical disks, magneto-optical disks, CD-ROMs, CD-Rs, magnetic tape, non-volatile memory cards, and DVDs may be used as the storage unit 201. The storage unit 201 may include a plurality of memories. Note also that the storage unit 201 can store information regarding the state of the apparatus in which the storage unit 201 is provided, such as setting information input by the user to the apparatus, the power remaining in a battery provided in the apparatus, and whether a power saving mode is in effect.

The control unit 202 is configured including one or more processors such as a CPU, an MPU, for example, and controls the communication apparatus as a whole by executing computer programs stored in the storage unit 201. Note that the control unit 202 may control the communication apparatus as a whole by operating in cooperation with computer programs and an Operating System (OS) stored in the storage unit 201. The control unit 202 generates data or signals (wireless frames) to be sent in communication with other communication apparatuses. Note that "CPU" is an acronym for "Central Processing Unit", and "MPU" is an acronym for "Micro Processing Unit". Furthermore, the control unit 202 may include a plurality of processors, such as a multi-core processor, and may control the communication apparatus as a whole using the plurality of processors. The control unit 202 may also be configured including, for example, an Application Specific Integrated Circuit (ASIC), a Digital Signal Processor (DSP), or a Field Programmable Gate Array (FPGA).

The control unit 202 also executes predetermined processing such as wireless communication, capturing images, printing, projection, and the like by controlling the function unit 203. The function unit 203 is configured including hardware for the communication apparatus to execute the predetermined processing. If the communication apparatus is a printer, the function unit 203 is a printing apparatus, and prints image data obtained through the communication unit 206, for example. If the communication apparatus is a scanner, the function unit 203 is a reading apparatus, and outputs image data generated through scanning to the exterior through the communication unit 206, for example. If the communication apparatus is a camera, the function unit 203 is configured including an image sensor and a lens, and outputs image data captured by the camera to the exterior through the communication unit 206. The function unit 203 may also include a configuration for implementing AP functions, STA functions, or the like.

The input unit 204 is configured including a touch panel, physical keys, and buttons, for example, and accepts various types of operations from user. The output unit 205 is configured including a display, or a speaker, for example, and performs various types of outputs to the user. The output by the output unit 205 can include a screen display output made on a display, audio output by a speaker, and the like. The output unit 205 may also include a vibration device, and may output information by vibrating. Note that both the input unit 204 and the output unit 205 may be implemented by a single module, as is the case with a touchscreen. The input unit 204 and the output unit 205 may be built into the communication apparatus, or may be implemented by external input/output devices. In this case, the communication apparatus has an input/output interface connected to the input/output devices.

The communication unit 206 performs control for wireless communication compliant with the IEEE 802.11 series standard. The communication unit 206 can control wireless communication compliant with the IEEE 802.11be standard, the IEEE 802.11bn standard, or a successor standard thereof, for example, as well as wired communication over a wired LAN or the like. The communication unit 206 may, for example, control wireless communication compliant with legacy standards such as the IEEE 802.11ax standard. The communication unit 206 controls the antenna 207 to send and receive signals for wireless communication generated by the control unit 202. For example, the communication apparatus communicates data such as image data, document data, and video datawith a partner apparatus through the communication unit 206. Note that if the communication apparatus supports an NFC standard, a Bluetooth standard, or the like in addition to the IEEE 802.11 series standard, the communication unit 206 may control wireless communication compliant with those communication standards. If the communication apparatus is capable of performing wireless communication compliant with a plurality of communication standards, separate communication units and antennas corresponding to those communication standards may be provided.

The antenna 207 is an antenna capable of detecting and emitting radio waves in the 2.4 GHz, 5 GHz, and 6 GHz bands. The antenna 207 may be configured to be capable of communicating in the same frequency band. In this case, the antenna 207 can be, for example, a multi-band antenna capable of communicating in a plurality of frequency bands. Although FIG. 2 illustrates an example in which the communication apparatus has only one antenna, a plurality of antennas may be used depending on the number of available spatial streams, for example. If the communication apparatus includes a plurality of antennas, a communication unit 206 corresponding to each antenna may be provided. The antenna 207 may be provided separately from the communication unit 206, or may be configured as a single module with the communication unit 206.

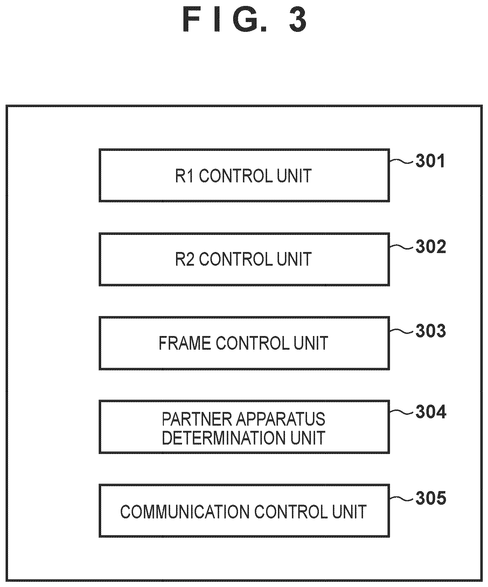

FIG. 3 illustrates an example of the functional (software) configuration of the communication apparatus according to the present embodiment (the communication apparatus 101 and the communication apparatus 102). The communication apparatus has, as functions, an R1 control unit 301, an R2 control unit 302, a frame control unit 303, a partner apparatus determination unit 304, and a communication control unit 305, for example. Note that this functional configuration is merely an example, and other functions may be added, or the functions mentioned here may be changed. For example, a single function block illustrated in FIG. 3 may be divided into a plurality of function blocks, or a plurality of function blocks may be combined into a single function block. In addition, some functions may be omitted, or functions not illustrated may be added. In one example, at least some of the functions illustrated in FIG. 3 can be implemented by the control unit 202 executing programs stored in the storage unit 201. Additionally, at least some of the functions illustrated in FIG. 3 may be implemented using dedicated hardware.

The R1 control unit 301 executes control for discovering a partner apparatus using a Probe Request frame and a Probe Response frame, and control for establishing connections, in accordance with the provisions of WFD R1. The R1 control unit 301 transmits a Probe Request frame, for example, and stands by for a Probe Response frame from other communication apparatus in the vicinity. In addition, when a Probe Request frame has been received from another communication apparatus, the R1 control unit 301 transmits a Probe Response to that other communication apparatus. Furthermore, when a Probe Request frame from another communication apparatus or a Probe Response frame addressed to the apparatus itself is received, the R1 control unit 301 determines that another communication apparatus is present. In addition, the R1 control unit 301 controls Wi-Fi Protected Setup (WPS) processing for exchanging communication parameters, GO Negotiation processing for determining a communication apparatus to function as a GO, and the like.

The R2 control unit 302 performs control for discovering a partner apparatus using a Service Discovery Frame (SDF), and control for establishing connections, in accordance with the provisions of WFD R2. For example, the R2 control unit 302 analyzes an SDF received from another communication device, confirms whether the other communication device is capable of communication using WFD, and the like. The R2 control unit 302 then controls Bootstrapping processing, GO Negotiation processing, and the like for exchanging communication parameters with other communication apparatuses capable of communicating using WFD.

The frame control unit 303 generates wireless frames upon receiving instructions from the R1 control unit 301 and the R2 control unit 302. In addition, the frame control unit 303 analyzes a received wireless frame, determines whether the frame is to be processed by the R1 control unit 301 or the R2 control unit 302, and transfers the information included in the wireless frame to the R1 control unit 301 or the R2 control unit 302 in accordance with the result of the determination.

The partner apparatus determination unit 304 obtains information of another communication apparatus detected by at least one of the R1 control unit 301 and the R2 control unit 302. The partner apparatus determination unit 304 then determines whether another communication apparatus detected by the R1 control unit 301 and the R2 control unit 302 is the same as an apparatus already detected and stored in the storage unit 201. If the apparatus is different from any communication apparatuses already detected, the partner apparatus determination unit 304 stores the information of that apparatus in the storage unit 201 as an apparatus serving as a connection destination candidate that has been newly detected. The partner apparatus determination unit 304 may also store information indicating whether the apparatus was detected through R1 or R2 in the storage unit 201 when storing the information of the newly detected connection destination candidate apparatus in the storage unit 201. In this case, the partner apparatus determination unit 304 can store, in the storage unit 201, an indication that if an apparatus previously detected by the R2 control unit 302 is newly detected by the R1 control unit 301, the apparatus has been detected through both R1 and R2, for example. The partner apparatus determination unit 304 can also store similar information in the storage unit 201 when an apparatus previously detected by the R1 control unit 301 is newly detected by the R2 control unit 302.

The communication control unit 305 performs control for sending frames generated by the frame control unit 303 (to the destination of that frame, if present). The communication control unit 305 also transfers frames received from the exterior to the frame control unit 303 via the antenna 207. In addition, the communication control unit 305 performs connection processing with the partner apparatus in accordance with connection parameters obtained by the R1 control unit 301 or the R2 control unit 302. The communication control unit 305 can execute connection processing such as authentication processing, association processing, 4-Way-Hand-Shake (4WHS) processing, and the like.

### Flow of Processing

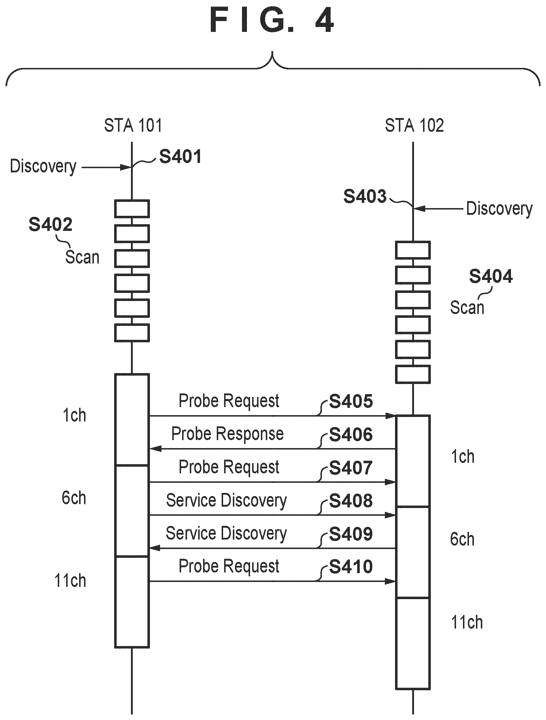

An example of the flow of communication processing executed by the communication apparatuses (the communication apparatus 101 and the communication apparatus 102) described above will be given next. FIG. 4 illustrates an example of the flow of processing when a communication apparatus compliant with the WFD standard starts searching for a partner apparatus in accordance with an instruction from a user or an application, for example, and discovers the partner apparatus. Although the communication apparatus 101 sends frames and the communication apparatus 102 receives frames in this sequence, the communication apparatus 102 can also send frames. The communication apparatus 101 can also receive frames.

The communication apparatus 101 accepts an instruction for discovering the partner apparatus from the user or application (step S401). The communication apparatus 101 can, for example, display a button for starting the process of discovering the partner apparatus through Wi-Fi Direct in the output unit 205, and determine that the instruction has been received when the button is selected by the user through the input unit 204. Upon receiving the instruction, the communication apparatus 101 scans all corresponding channels in order to detect a partner apparatus operating as a GO (step S402). For example, if the partner apparatus is operating as a GO on a specific channel other than channels 1, 6, and 11 in the 2.4 GHz band, the communication apparatus 101 can discover the partner apparatus by scanning all channels. Note that "channel" may sometimes be denoted as "ch". At this time, the frame through which the communication apparatus 101 discovers the partner apparatus can be a Beacon frame, a Probe Response frame, or the like. Note that in one example, the communication apparatus 101 may scan only the Preferred Scanning Channels (PSC) in the 6 GHz band. The communication apparatus 101 can only receive frames from the partner apparatus by staying on a specific channel for a certain amount of time after the scanning of all channels is complete. The specific channel here can be, for example, channel 6. The communication apparatus 101 then cycles through channels 1, 6, and 11 in the 2.4 GHz band and sends the Probe Request frame on each of those channels (steps S405, S407, and S410). In addition, the communication apparatus 101 sends an SDF in addition to the Probe Request frame on channel 6 (step S408). At this time, the length of the period that the communication apparatus 101 waits on each channel is assumed to be 100 milliseconds (msec). Note that this is merely an example, and other values may be used as the length of the period. However, making the length of this period a multiple of 100 msec makes it easier to discover a partner apparatus configured to stand by on each channel for a period of the same length. In addition, after operating on channel 11, the communication apparatus 101 may stand by for reception on channel 6 at 2.4 GHz for a random length of time only. This makes it possible to prevent the communication apparatus 101 and the partner apparatus from being unable to discover each other due to the communication apparatus 101 and the partner apparatus operating while shifted at the same time interval. In addition, the communication apparatus 101 may repeat a Listen mode, which only stands by for reception and passively detects the presence of other communication apparatuses, and a Search mode, which sends each frame and actively searches for other communication apparatuses, until the user selects a connection destination.

Upon receiving an instruction for discovering the partner apparatus from the user or application (step S403), the communication apparatus 102 also scans all corresponding channels to detect a partner apparatus operating as a GO, in the same manner as the communication apparatus 101 (step S404). The communication apparatus 102 then cycles through channels 1, 6, and 11 in the 2.4 GHz band and stands by for the reception of a Probe Request frame or an SDF on each of those channels. Like the communication apparatus 101, the communication apparatus 102 may transmit the Probe Request frame or the SDF. Upon receiving a Probe Request frame on each channel, the communication apparatus 102 returns a Probe Response frame. For example, the communication apparatus 102 returns a Probe Response frame to the communication apparatus 101 upon receiving a Probe Request frame transmitted from the communication apparatus 101 on channel 1 in step S405 while standing by on channel 1 (step S406). On the other hand, in step S407, a Probe Request frame is sent from the communication apparatus 101 on channel 6, but at this timing, the communication apparatus 102 is standing by on channel 1 and therefore does not send a Probe Response frame. In addition, in step S410, a Probe Request frame is sent from the communication apparatus 101 on channel 11, but at this timing, the communication apparatus 102 is standing by on channel 6 and therefore does not send a Probe Response frame. The communication apparatus 102 can receive the SDF sent from the communication apparatus 101 on channel 6 in step S408, and thus in this case, the SDF is returned on channel 6 (step S409). Note that the communication apparatus 102 may execute the same processing as the communication apparatus 101, and the communication apparatus 101 may execute the same processing as the communication apparatus 102.

When the communication apparatus 101 is requesting the service and the communication apparatus 102 is providing the service, the SDF sent by the communication apparatus 101 in step S408 described above is a Subscribe SDF, and the SDF sent by the communication apparatus 102 in step S409 described above is a Publish SDF. Upon receiving the Subscribe SDF from the communication apparatus 101, the communication apparatus 102 may send the Publish SDF as a response, or may send actively on channel 6. The communication apparatus may also send both the Publish SDF and the Subscribe SDF, regardless of whether the communication apparatus is requesting or providing the service. The communication apparatus may also send a Follow up, which is a type of SDF, after receiving an SDF from another communication apparatus.

In this manner, the communication apparatus can confirm the presence of a partner apparatus using the Beacon frame, the Probe Request frame, the Probe Response frame, and the SDF. If the communication apparatus 102 supports WFD R1, the communication apparatus 101 can receive the Probe Response frame from the communication apparatus 102 by sending a Probe Request frame. In this case, the communication apparatus 101 can discover the communication apparatus 102 by receiving the Probe Request frame, and the communication apparatus 102 can discover the communication apparatus 101 by receiving the Probe Response frame. Additionally, if the communication apparatus 101 supports WFD R1, the communication apparatus 102 can receive a Probe Response frame from the communication apparatus 101 by sending a Probe Request frame. In this case, the communication apparatus 101 can discover the communication apparatus 102 by receiving the Probe Response frame, and the communication apparatus 102 can discover the communication apparatus 101 by receiving the Probe Request frame. Additionally, if the communication apparatus 102 supports WFD R2, the communication apparatus 101 can discover the communication apparatus 102 by receiving an SDF from the communication apparatus 102 (e.g., as a response, having send an SDF). The communication apparatus 102 can also discover the communication apparatus 101 by receiving an SDF sent from the communication apparatus 101. Note that a configuration can also be employed in which the communication apparatus 101 and the communication apparatus 102 support only one of WFD R1 and WFD R2.

Although the example described above describes a case in which each communication apparatus cycles through the channels in the order of channel 1, channel 6, and channel 11, the configuration is not limited thereto. The communication apparatus may prioritize channel 6, and cycle through the channels in the order of channel 6, channel 1, and channel 11, for example. Channel 6 is the recommended channel for searching for a partner apparatus through WFD R2, and it is therefore assumed to be a channel that makes it easier for the partner apparatus to be discovered. For this reason, the communication apparatus can improve the probability of being able to discover a partner apparatus that supports WFD R2 by prioritizing channel 6 when cycling through the channels. The communication apparatus may also increase the number of times channel 6 is cycled through when cycling through the channels, or increase the time to remain on channel 6 compared to other channels, to improve the probability that a partner apparatus can be discovered. In addition, if the communication apparatus agrees in advance with the partner apparatus to search for each other using a specific channel, the standby time on that specific channel may be increased. For example, according to the standards, WFD R1 recommends searching for a partner apparatus on channel 1, channel 6, and channel 11, whereas WFD R2 recommends searching for a partner apparatus on channel 6. On the other hand, searching for a partner apparatus on channel 7 in the 6 GHz band can be recommended by an instruction from an application used by the communication apparatus, for example. In this case, the communication apparatus can ensure a long period for sending frames and standing by for reception on channel 7 in the 6 GHz band, and shorten the period for searching on other channels.

### Frame Configuration

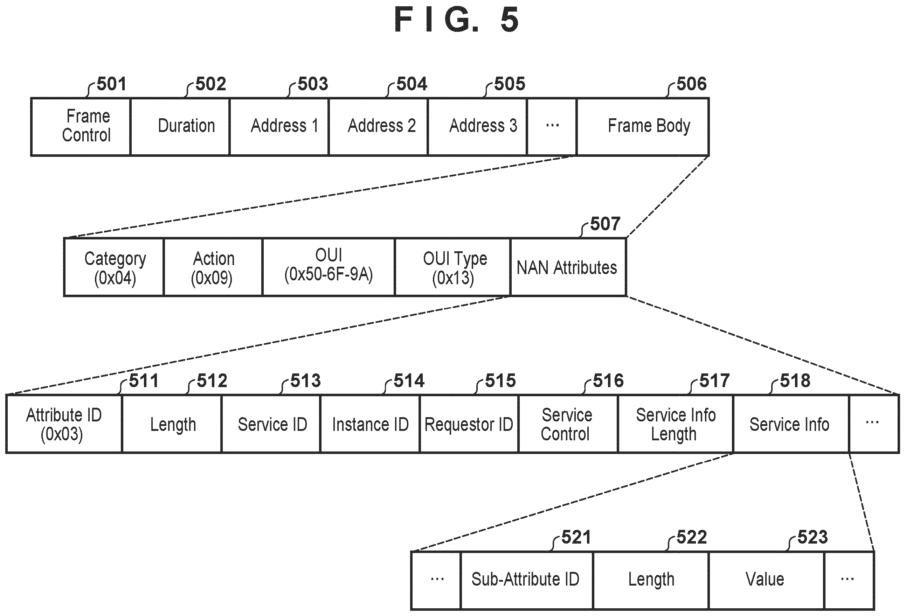

FIG. 5 illustrates an example of the configuration of an SDF (Media Access Control (MAC) frame) sent and received through WFD R2. The SDF is defined in the form of an Action frame specified by the IEEE 802.11 series standard. The SDF includes a Frame Control field 501, a Duration field 502, an Address 1 field 503, an Address 2 field 504, an Address 3 field 505, and a Frame Body field 506.

A value indicating the type of the frame is stored in the Frame Control field 501. When an 8-bit bit string indicating the Frame Control field 501 is represented by B7 to B0, the frame can be indicated as an Action frame by setting B2 and B3 to 00, and setting B4 to B7 to 1011. The frame can be indicated as an Action No Ack frame by setting B2 and B3 to 00, and setting B4 to B7 to 0111, in the Frame Control field 501. A value indicating the time for which the process associated with the frame to be sent dominates the medium (wireless channel) is stored in the Duration field 502. The MAC Address of the destination communication apparatus is stored in the Address 1 field 503. In the SDF used in the present embodiment, a value indicating a broadcast or a Peer-to-Peer (P2P) Device address of the destination communication apparatus is stored in the Address 1 field 503. Additionally, a Multicast address specified by the P2P network may be stored in the Address 1 field. The MAC Address of the source communication apparatus is stored in the Address 2 field 504. In the SDF used in the present embodiment, the P2P Device Address of the source communication apparatus is stored in the Address 2 field 504. A wildcard Basic Service Set Identifier (BSSID) or the P2P Device Address of the destination communication apparatus is stored in the Address 3 field 505.

The Frame Body field 506 includes information of the Action frame. The Frame Body field 506 includes a Category field, an Action field, an OUI field, an OUI Type field, and a NAN Attributes field 507. The Category field is set to 0x04 and the Action field is set to 0x09, which indicates that the frame is an Action frame defined in WFD. The OUI field is set to 0x50-6F-9A, and the OUI Type field is set to 0x13, which indicates that the frame is an SDF defined for Wi-Fi Aware. Note that the OUI Type field may be 0x09 as specified by Wi-Fi Direct. The NAN Attributes field 507 includes an Attribute (attribute value) defined for Wi-Fi Aware. The NAN Attributes field 507 includes, for example, a Service Descriptor Attribute indicated as an Attribute ID field 511 to a Service Info field 518.

A value indicating the type of the Attribute is stored in the Attribute ID field 511. For example, setting the value to 0x03 indicates that the following field is a Service Descriptor Attribute. A value indicating the length of the Attribute is stored in a Length field 512. The value (hash value) output by a hash function which takes as an argument the service name provided by the communication apparatus sending this frame or requested by the communication apparatus, is stored in a Service ID field 513. ID assigned to the service that is managed, provided, or requested by the communication apparatus sending the frame is stored in an Instance ID field 514. If the communication apparatus has received an SDF from the partner apparatus and has received an Instance ID through that SDF, that ID is stored in a Requestor ID field 515. On the other hand, if the communication apparatus has not received an Instance ID from the partner apparatus, the Requestor ID field 515 is set to 0. A value indicating whether the SDF is a Publish, Subscribe, or Follow up SDF is stored in a Service Control field 516. The Service Control field 516 also includes bits that indicate whether a following Service Info Length field 517 and Service Info field 518 are present. A value indicating the length of the following Service Info field 518 is stored in the Service Info Length field 517. The Service Info field 518 is a field in which information related to the service is stored. The Sub-Attributes described below, for example, are stored in the Service Info field 518.

The Sub-Attributes include a Sub-Attribute ID field 521, a Length field 522, and a Value field 523. The Sub-Attribute ID field 521 indicates the type of attribute information to be included as a Sub-Attribute. A value indicating the length of the Value field 523 is stored in the Length field 522. A value of the type of information specified in the Sub-Attribute ID field 521 is included in the Value field 523. Note that the foregoing information may be included in a Service Descriptor Extension Attribute (SDEA) to include more information in the Service Info field 518. In this case, the value 0x0E is stored in the Attribute ID field 511.

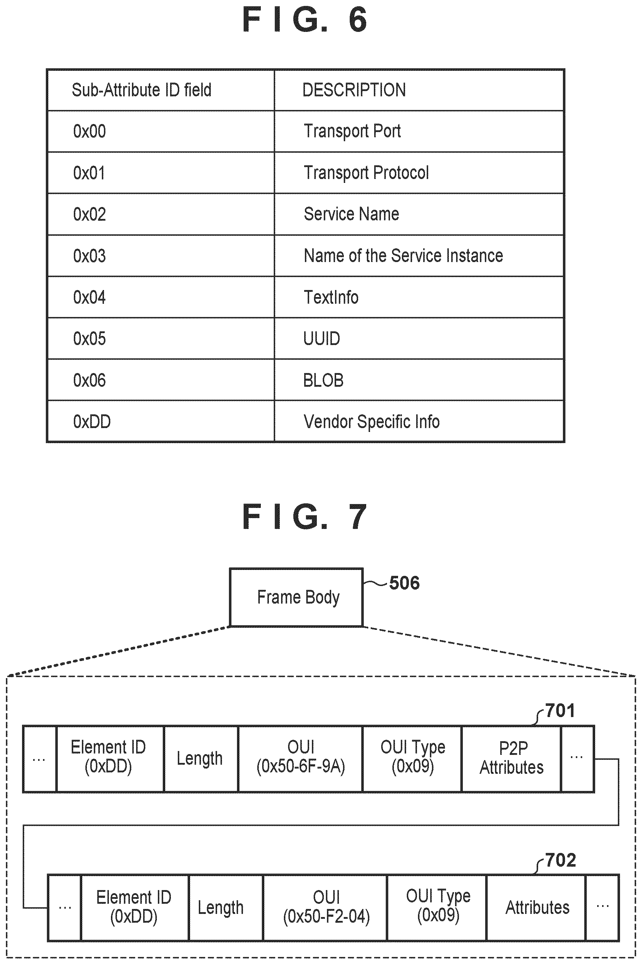

FIG. 6 illustrates a correspondence relationship between the value of the Sub-Attribute ID field 521 and the type of information included in the Value field 523. As illustrated in FIG. 6, when the value of the Sub-Attribute ID field 521 is set to 0x00, a port number used in the Transport layer is indicated in the Value field 523. When the value of the Sub-Attribute ID field 521 is set to 0x01, the type of the protocol used in the Transport layer is indicated in the Value field 523. For example, if the protocol type is TCP, a value of 0x06 is set in the Value field 523, and if the protocol type is UDP, a value of 0x11 is set in the Value field 523. If the Sub-Attribute ID field 521 is 0x02, the Value field 523 indicates the name of the service. If the value of the Sub-Attribute ID field 521 is set to 0x03, the service instance name is indicated in the Value field 523. If the value of the Sub-Attribute ID field 521 is set to 0x04, text information is indicated in the Value field 523. In this case, the Value field 523 can include any data indicated using, for example, the XML format, the CSV format, the JSON format, the YAML format, or the like. If the value of the Sub-Attribute ID field 521 is set to 0x05, the UUID is indicated in the Value field 523. If the value of the Sub-Attribute ID field 521 is set to 0x06, a Binary Large Object (BLOB) is indicated in the Value field 523. In this case, unstructured data, binary data, or the like can be stored in the Value field 523. If the value of the Sub-Attribute ID field 521 is set to 0xDD, any desired value defined by the vendor is indicated in the Value field 523.

Note that a P2P Attribute included in P2P IE (described later) may be indicated in the NAN Attributes field 507 using the Element Container Attribute. Attributes included in WCE IE may also be indicated in the NAN Attributes field 507.

The Probe Request frame, the Probe Response frame, or the Beacon frame will be described with reference to FIG. 7. These frames are classified as Management Frames, and are configured to include the Frame Control field 501 to the Frame Body field 506 in the same manner as in FIG. 5. FIG. 7 illustrates the Frame Body field 506 in detail. The frame can be indicated as being a Probe Request frame by setting B2 and B3 to 00, and setting B4 to B7 to 0010, in the Frame Control field 501. The frame can also be indicated as being a Probe Response frame by setting B2 and B3 to 00, and setting B4 to B7 to 1010, in the Frame Control field 501. The field can also be indicated as being a Beacon frame by setting B2 and B3 to 00, and setting B4 to B7 to 0001, in the Frame Control field 501.

The Frame Body field 506 of this frame includes information of each Element. For example, P2P IE including P2P information, WCE IE including WPS information, and the like are included in the Frame Body field 506. P2P Extended IE, which has been extended so as not to affect models which only support R1, may be included in the Frame Body field 506. An SSID Element for indicating a Service Set Identifier (SSID) may be included in the Frame Body field 506. Furthermore, a Multiple BSSID Element for indicating information about other BSSIDs operating at the same time may be included in the Frame Body field 506. A Service Hash Element for notifying the hash value of the service name may be included in the Frame Control field 501. Furthermore, a Multi-Link Element for indicating a plurality of items of link information may be included in the Frame Control field 501.

As illustrated in FIG. 7, the Frame Body field 506 may include, for example, an Element ID field, a Length field, an OUI field, an OUI Type field, and a P2P Attributes field 701. Furthermore, as illustrated in FIG. 7, the Frame Body field 506 may include, for example, an Element ID field, a Length field, an OUI field, an OUI Type field, and an Attribute field 702. Note that the Frame Body field 506 may include only one of the P2P Attributes field 701 and the Attribute field 702, or may include both. Additionally, the P2P Attributes field 701 may be provided after the Attribute field 702. Other configurations capable of storing the same information may be included as well. The Element ID field is set to 0xDD, which indicates that the information is a vendor-defined Element. Additionally, the OUI field is set to 0x50-6F-9A, and the OUI Type field is set to 0x09, which indicates that the Element is a P2P IE defined by WFD. The OUI field is set to 0x50-F2-04, and the OUI Type field is set to 0x04, which indicates that the Element is a WCE IE. In the present embodiment, an Attribute defined by Wi-Fi Direct is stored in the P2P Attributes field 701, and an Attribute defined by WPS is stored in the Attributes field 702.

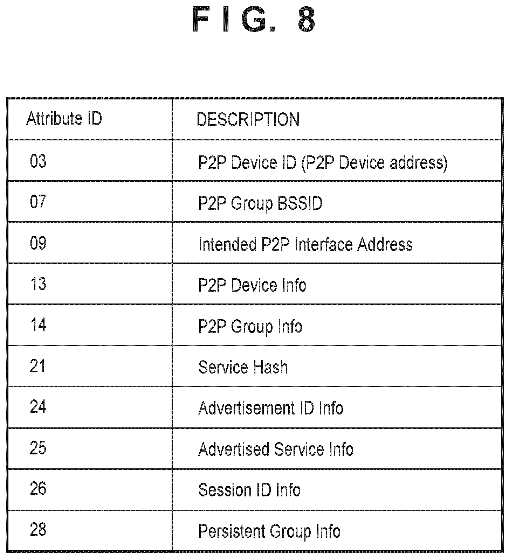

FIG. 8 illustrates an example of the type of information stored in the P2P Attributes field 701, in which the P2P IE is included. The P2P Attributes field 701 includes information in the order of Attribute ID, Length, and Value. A value pertaining to the type of information indicated by the Attribute ID is stored in Value. As illustrated in FIG. 8, when the value of the Attribute ID field is set to 03, the P2P Device ID (i.e., the P2P Device Address) is stored in the Value field. If the value of the Attribute ID field is set to 07, the P2P Group BSSID is stored in the Value field. If the value of the Attribute ID field is set to 09, an Intended P2P Interface Address (i.e., a P2P Interface Address) is stored in the Value field. Here, the P2P Device Address is a MAC Address used in P2P connection and disconnection processing. The P2P Interface Address is a MAC Address used when communicating. The P2P Device Address and the P2P Interface Address may be the same value, or may be different values. If the value of the Attribute ID field is set to 13, P2P Device Info (i.e., the P2P Device Address and the Device Name) is stored in the Value field. If the value of the Attribute ID field is set to 14, P2P Group Info is stored in the Value field. In other words, the P2P Device Address, the P2P Interface Address, and the Device Name of the Client participating in the P2P network are stored in the Value field. If the value of the Attribute ID field is set to 21, the Service Hash value (i.e., the hash value of the service name) is stored in the Value field. If the value of the Attribute ID field is set to 24, Advertisement ID Info (i.e., the Advertisement ID and the Service MAC Address) is stored in the Value field. If the value of the Attribute ID field is set to 25, Advertised Service Info (i.e., the Advertisement ID and the Service Name) is stored in the Value field. If the value of the Attribute ID field is set to 26, Session ID Info (i.e., a Session ID and a Session MAC Address) is stored in the Value field. If the value of the Attribute ID field is set to 28, Persistent Group Info (i.e., the P2P Device Address and the SSID) is stored in the Value field.

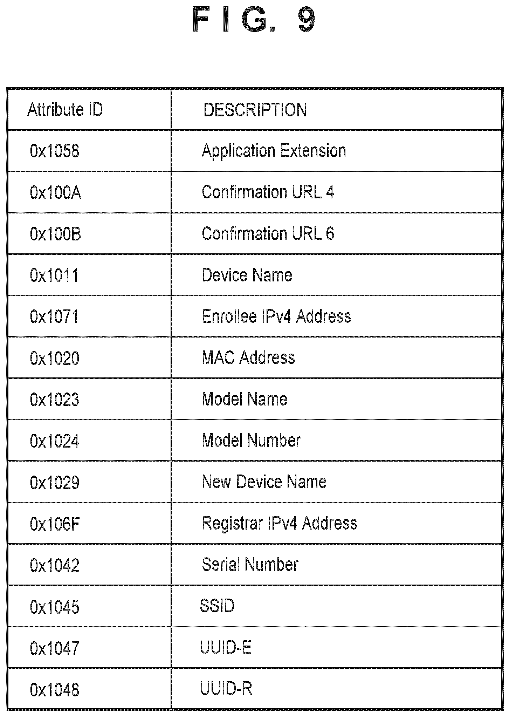

FIG. 9 illustrates an example of the type of information stored in the Attributes field 702, in which the WCE IE is included. The Attribute field 702 includes information in the order of Attribute ID, Length, and Value. A value pertaining to the type of information indicated by the Attribute ID is stored in Value. If the value of the Attribute ID field is set to 0x1058, an Application Extension (i.e., a UUID) is stored in the Value field. If the value of the Attribute ID field is set to 0x100A, a Confirmation URL4 (i.e., a URL used in IPv4) is stored in the Value field. If the value of the Attribute ID field is set to 0x100B, a Confirmation URL6 (i.e., a URL used in IPv6) is stored in the Value field. If the value of the Attribute ID field is set to 0x1011, the Device Name is stored in the Value field. If the value of the Attribute ID field is set to 0x1071, an Enrollee IPv4 Address is stored in the Value field. If the value of the Attribute ID field is set to 0x1020, a MAC Address is stored in the Value field. If the value of the Attribute ID field is set to 0x1023, a Model Number is stored in the Value field. If the value of the Attribute ID field is set to 0x1029, a New Device Name is stored in the Value field. If the value of the Attribute ID field is set to 0x106F, a Registrar IPv4 Address is stored in the Value field. If the value of the Attribute ID field is set to 0x1042, a Serial Number is stored in the Value field. If the value of the Attribute ID field is set to 0x1045, an SSID is stored in the Value field. If the value of the Attribute ID field is set to 0x1047, a UUID-E (i.e., a UUID generated by the Enrollee) is stored in the Value field. If the Attribute ID field is set to the value of 0x1048, a UUID-R (i.e., the UUID generated by the Registrar) is stored in the Value field.

### Process for Determining Partner Apparatus

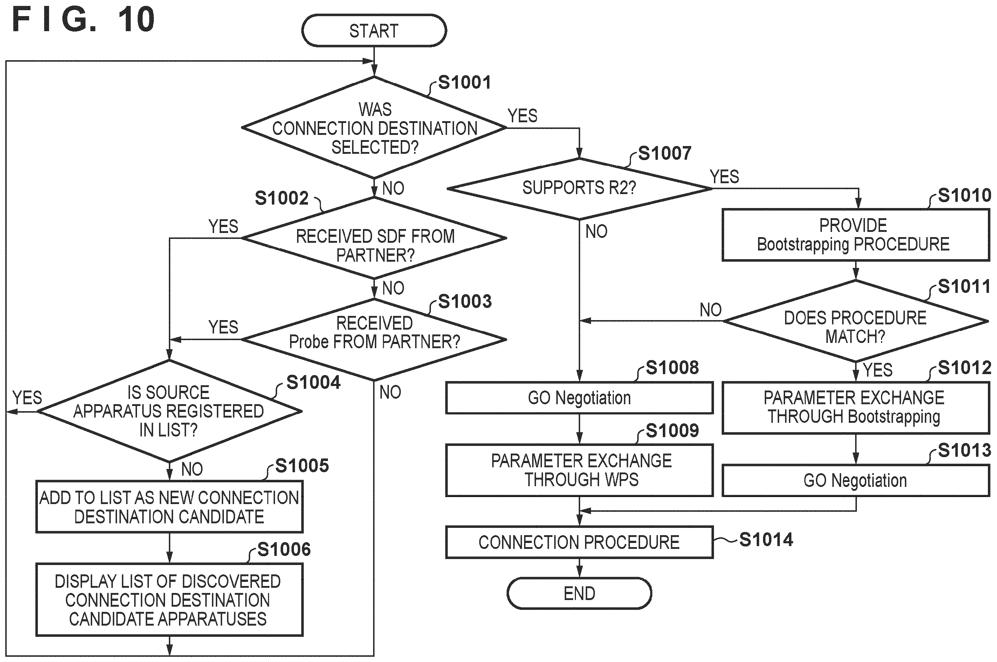

An example of the flow of processing performed when a communication apparatus connects to another communication apparatus will be described next with reference to FIG. 10. The processing illustrated in FIG. 10 can be started, for example, when a user or an application requests connection processing, such as the discovery of a communication partner apparatus through WFD, to be performed. However, the processing illustrated in FIG. 10 is not limited to WFD, and may be started when the communication apparatus has received a detection instruction or a connection processing start instruction for a communication partner apparatus without a standard having been specified, for example. Note that the processing illustrated in FIG. 10 is merely an example, and can be modified in a variety of ways. For example, the order of the processing steps may be changed, some processing steps may be omitted, or additional processing steps not illustrated may be added.

The communication apparatus determines whether the user has selected a connection destination (step S1001). At this time, the communication apparatus may determine whether a frame for indicating that the partner apparatus has selected a connection with the communication apparatus has been received from the partner apparatus instead of or in addition to determining whether the user has selected the connection destination in the communication apparatus itself. Note that the communication apparatus may determine that the connection destination has been selected in step S1001 when, for example, a frame for selecting a Bootstrapping procedure, a GO Negotiation Request frame, or the like has been received. If the user of the communication apparatus or the partner apparatus has selected the Bootstrapping procedure, the communication apparatus may move the sequence to step S1015 (described later).

If the connection destination has not been selected (NO in step S1001), the communication apparatus performs processing for searching for another communication apparatus that is a candidate for the connection destination. The communication apparatus can, for example, scan all channels to receive each frame and operate while repeatedly switching between Search mode and Listen mode. The communication apparatus confirms whether an SDF has been received from another communication apparatus that is a candidate for the connection destination (step S1002). In addition, the communication apparatus confirms whether a frame such as a Probe Request frame, a Probe Response frame, a Beacon frame, or the like has been received from another communication apparatus that is a candidate for the connection destination (step S1003). If none of these frames have been received (NO in steps S1002 and S1003), the communication apparatus returns the sequence process to step S1001. However, if any of these frames has been received (YES in step S1002 or S1003), the communication apparatus determines whether the other communication apparatus that is the source of the frame is registered in a list of other communication apparatuses that are connection destination candidates (step S1004). The determination made in step S1004 will be described in greater detail later. If the communication apparatus determines that the other communication apparatus that is the source of the frame is registered in the list (YES in step S1004), the sequence returns to step S1001. However, if the communication apparatus determines that the other communication apparatus that is the source of the frame is not registered in the list (NO in step S1004), the communication apparatus adds that other communication apparatus to the list of apparatuses that are connection destination candidates (step S1005). The communication apparatus then outputs (presents to the user) the list of apparatuses that are connection destination candidates through the output unit 205. An example of the output at this time will be described later.

In step S1004, the communication apparatus confirms the Address 2 field 504 of the SDF, the Probe Request frame, the Probe Response frame, and the Beacon frame, for example ("each frame" hereinafter). The communication apparatus may then determine whether the P2P Interface Address stored in the Address 2 field 504 matches the P2P Interface Address of an apparatus that is a connection destination candidate registered in the list. If the P2P Interface Address stored in the Address 2 field of the received frame is registered in the list, the communication apparatus can determine that the apparatus that is the source of that frame is registered in the list. In this case, when another communication apparatus that is not registered in the list is discovered, the communication apparatus may register the identification information of that other communication apparatus in association with the P2P Interface Address. The communication apparatus may also make this determination using information aside from the P2P Interface Address. For example, if the MAC Address included in the P2P IE (P2P Attribute field 701) of each frame is registered in the list, the other communication apparatus that is the source of that frame can be determined to already be registered in the list. One or both of the P2P Device Address or the P2P Group BSSID indicated in the P2P Device ID may be used as the MAC Address, for example. Additionally, the P2P Interface Address indicated by the Intended P2P Interface Address may be used as the MAC Address. The P2P Device Address indicated by the P2P Device Info and the P2P Device Address indicated by the P2P Group Info may be used. The Service MAC Address indicated by the P2P Interface Address and the Advertisement ID Info may also be used. Additionally, the Session MAC Address indicated by the Session ID Info and the P2P Device Address indicated by the Persistent Group Info may be used. If the MAC Address included in the WCE IE (Attribute field 702) of each frame is registered in the list, the communication apparatus may determine that the other communication apparatus that is the source of that frame is registered in the list. The communication apparatus may make the determination using the information stored in WCE IE instead of or in addition to the determination based on the information stored in P2P IE. In one example, the MAC Address and BSSID included in the Multiple BSSID Element of each frame or the MLD MAC Address included in the Multi-Link Element of each frame can be used for the determination. The MAC Address of each link may also be used. The MAC Address specified by one or more combinations of the above-described information, or any combination including the values indicated in the fields described above and other fields, may be used in the determination. In either case, if the address information included in the received frame matches the address information registered in the list, the communication apparatus that is the source of that frame can be determined to already be registered. On the other hand, if none of the address information included in the received frame is registered in the list, the other communication apparatus that is the source of that frame is determined to not be registered in the list, and the other communication apparatus can be newly registered in the list. Note that only one item of the above-described information may be used in the determination of S1004, and any combination of the above-described items of information may be used in the determination.

The communication apparatus may also determine whether the other communication apparatus that is the source of the frame is registered in the list using the Service Hash value instead of or in addition to the above-described example. For example, the determination can be made on the basis of the Service ID field 513 included in the SDF and the Service Hash value included in the P2P Attributes field 701 of each frame. The Service Hash value indicated by the Service Hash Element included in each frame can also be used. The Service Hash value specified by one or more combinations of the above-described information, or any combination including the values indicated in the fields described above and other fields, may be used in the determination. In other words, if the specified Service Hash value is registered in the list, the other communication apparatus that is the source of the frame can be determined to already be registered in the list. The communication apparatus may also determine whether the other communication apparatus that is the source of the frame is registered in the list using the service name instead of or in addition to the above-described example. For example, the Service Name indicated in the Service Info field 518 of the SDF can be used for the determination. Additionally, the Service Name indicated by the Advertisement Service Info included in the P2P Attributes field 701 of each frame may be used for the determination. The Service Name specified by one or more combinations of the information stored in these fields, or one or more combinations of the values indicated by the fields described above and other fields, may also be used in the determination.

The communication apparatus can also determine whether the apparatus that is the source of the frame is already registered in the list using one or more of the UUID, the Device Name, the Serial Number, the Model Name, and the Model Number instead of or in addition to the above-described example. Note that "UUID" is an acronym of "Universal Unique Identifier", and is an identifier for uniquely identifying an apparatus, a service, or the like that is the source of a frame. The Device Name is, for example, the device name of the apparatus that is the source of the frame. The Serial Number is a serial number assigned to the apparatus (that is the source of the frame, for example). The Model Name is the name of the model of the apparatus (that is the source of the frame, for example), and the Model Number is the number of the model. For example, the UUID included in the Service Info field 518 of the SDF can be used for the determination. Additionally, the Device Name indicated by the P2P Device Info included in the P2P Attributes field 701 of each frame, the Device Name indicated by the P2P Group Info, and the like can be used for the determination. Information indicated by the Application Extension in the Attribute field 702 included in the WCE IE of each frame may also be used. This information includes, for example, the UUID, the Device Name, the Model Name, the Model Number, the New Device Name, the Serial Number, and the like. The UUID indicated by the UUID-E and the UUID indicated by the UUID-R may also be used. Any one or more combinations of these items of information, or any combination including the values indicated in the fields described above and other fields, may be used. If one or more of the UUID, the Device Name, the Serial Number, the Model Name, and the Model Number specified by the information is already registered in the list, the apparatus that is the source of the frame can be determined to already be registered.

The communication apparatus may also determine whether the other communication apparatus that is the source of the frame is registered in the list using the SSID instead of or in addition to the above-described example. For example, the SSID indicated by the Persistent Group Info included in the P2P Attribute field 701 of each frame can be used. The SSID in the Attribute field 702 included in the WCE IE of each frame and the SSID included in the SSID Element of each frame may also be used. Note that the SSID specified by one or more combinations of the above-described information, or any combination including the values indicated in the fields described above and other fields, may be used in the determination.

Other information may be used in the determination in addition to or instead of the above-described information. For example, one or both of the Confirmation URL 4 and the Confirmation URL 6 in the Attribute field 702 in the WCE IE of each frame can be used. Additionally, one or both of the Enrollee IPv4 Address and the Registrar IPv4 Address may be used. Information indicated in the Vendor Specific Element of each frame may also be used in the determination. The information indicated in the Vendor Specific Info defined in the SDF may include at least one of the values described above, and those values may be used in the determination.

Note that the determination may be made by combining two or more of the above-described items of information, or the determination may be made using only one of the above-described items of information. For example, if the combination of the service name and the MAC Address is registered in the list, and a frame including information that matches the registered combination is received, the frame can be determined to have been received from the other communication apparatus that is already registered. For example, only the MAC Address of the other communication apparatus that is the source may be used in the determination. For example, the configuration can be such that when the apparatus that is the source of the frame in the list is registered, the MAC Address of the apparatus that is the source is registered. Then, if the MAC Address of the source of the received frame is registered in the list, the frame can be determined to have been received from the other communication apparatus that is already registered. When registering the other communication apparatus that is the source of the frame in the list in order to make each of the above-described determinations, of the values included in that frame, the value corresponding to the information used in the determination can be registered in the list along with information such as the name of the other communication apparatus.

By generating a list of other communication apparatuses detected as described above, the user of the communication apparatus can confirm the list and select another communication apparatus as a connection destination. Note that another communication apparatus that is the connection destination may be selected by an application in the communication apparatus, rather than by the user. The communication apparatus accepts the selection by the user by, for example, displaying a list of other communication apparatuses serving as connection destination candidates in the display and accepting a tap or a click on information indicating a specific communication apparatus from the information of the apparatuses displayed in the list. The communication apparatus may also accept the specification of another communication apparatus as a connection destination through voice input, for example. In addition, the communication apparatus may set a predetermined condition in advance, and when another communication apparatus serving as a connection destination candidate that meets that predetermined condition is detected, may automatically select that other communication apparatus. In addition, the communication apparatus may store another communication apparatus to which a connection has been made in the past, and when that other communication apparatus is detected, may automatically select that other communication apparatus. Such automatic selection can be made on the basis of a setting made in advance by the user or a setting made by an application. Then, when another communication apparatus as a connection destination is selected, the communication apparatus performs connection processing with the other communication apparatus.

When another communication as a connection destination is selected, the communication apparatus determines whether the other communication apparatus that is selected supports WFD R2 (step S1007). Here, instead of determining whether WFD R2 is supported, a determination may be made as to whether Preassociation Security Negotiation (PASN) is supported. Whether the other communication apparatus supports PASN can be determined by confirming the Capability in the P2P Attributes field 701 included in the P2P IE of each frame. Additionally, whether the other communication device supports WFD R2 may be determined according to whether the Attribute that presents a list of Bootstrapping procedures is included in the frame. Additionally, whether the other communication apparatus supports WFD R2 may be determined according to whether the frame received when the other communication apparatus is detected is an SDF. In other words, when another communication apparatus is detected using an SDF, the other communication apparatus may be determined to support WFD R2. On the other hand, when another communication apparatus is detected using a Beacon frame, a Probe Request frame, or a Probe Response frame, the determination as to whether WFD R2 is supported can be made on the basis of the Attribute such as that described above.

If the selected other communication apparatus that is a connection destination candidate is determined not to support WFD R2 (NO in step S1007), the communication apparatus executes connection processing based on WFD R1. In other words, the communication apparatus performs GO Negotiation with other communication apparatuses (step S1008). Which of the communication apparatus and the other communication apparatus will function as the GO is determined through this negotiation. Note that the apparatus determined not to function as the GO functions as a CL. The communication apparatus exchanges parameters used for the connection with other communication apparatuses by executing WPS in accordance with the role determined in step S1008 (step S1009). Then, after exchanging the parameters, the communication apparatus establishes a connection with the other communication apparatus that has been selected (step S1014). Authentication frame exchange, Association request frame and Association response frame exchange, and 4WHS are performed upon the establishment of this connection.

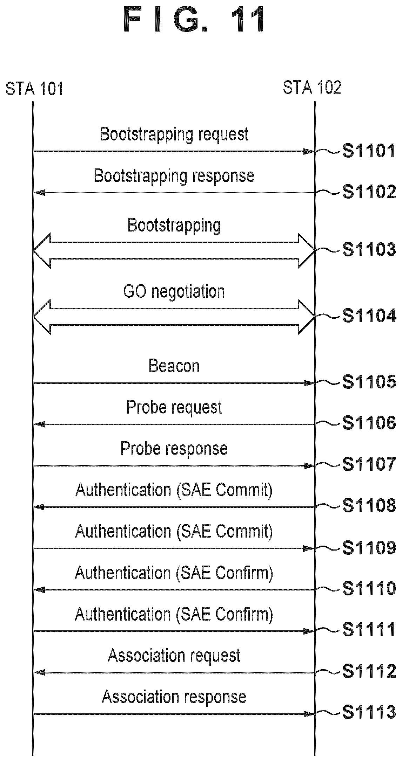

If the selected other communication apparatus serving as the connection destination candidate supports WFD R2 (YES in step S1007), the communication apparatus shares a bootstrapping procedure to be used with the other communication apparatus, and selects which procedure to execute (step S1010). The bootstrapping procedure may be selected by the user, or a procedure that both the communication apparatus and the other communication apparatus can use may be selected by either of the communication apparatus and the other communication apparatus. For example, as indicated by steps S1101 and S1102 of FIG. 11, one communication apparatus sends a request frame for selecting a bootstrapping procedure, and the other communication apparatus returns a response frame for determining the bootstrapping procedure. If, for example, the communication apparatus is unable to determine the bootstrapping procedure to be used with the other communication apparatus (NO in step S1011), the sequence may move to step S1008. In other words, if the communication apparatus is unable to perform the connection processing through the Bootstrapping procedure, the communication apparatus can exchange parameters through a GO Negotiation and WPS in accordance with WFD R1. In addition, the communication apparatus may execute the procedures in steps S1101 and S1102 of FIG. 11 again and attempt to specify a bootstrapping procedure that can be used with the other communication apparatus. If the communication apparatus has successfully specified a bootstrapping procedure that can be used with the other communication apparatus (YES in step S1011), the communication apparatus exchanges parameters with the other communication apparatus through bootstrapping (step S1012). The communication apparatus then performs GO Negotiation in accordance with the exchanged parameters (step S1013). Note that the processing of step S1012 and step S1013 may be executed at the same time. For example, the processing of steps S1012 and S1013 may be executed in parallel when a procedure is selected by pressing a button at the same time (or substantially at the same time) in the communication apparatus and the other communication apparatus. In this case, for example, the public keys of the respective apparatuses and the information for the GO Negotiation are stored in the same frame. Then, after exchanging the parameters, the communication apparatus establishes a connection with the other communication apparatus that has been selected (step S1014). Note that the GO Negotiation (steps S1008 and S1013) can be skipped when the GO is discovered by scanning all channels and a connection is made to another communication apparatus already functioning as a GO. In this case, only the parameter exchange using WPS (step S1009) or the parameter exchange using the bootstrapping procedure (step S1012) is executed. In addition, when reconnecting with another communication apparatus connected to in the past, the communication apparatus may execute only authentication processing, without executing the processing of steps S1009 to S1012 and instead of performing the GO Negotiation in step S1008 or step S1013.

The flow of connection processing, performed after the communication apparatus 101 and the communication apparatus 102, which support WFD R2, have recognized the presence of each other using the SDF in the WFD processing, will be described next with reference to FIG. 11. Note that in the following descriptions, the roles of the communication apparatus 101 and the communication apparatus 102 may be switched. First, the communication apparatus 101 requests the communication apparatus 102 to present a bootstrapping procedure (present the procedure that the communication apparatus 102 wishes to use) (step S1101). The bootstrapping procedure indicates a method for exchanging parameters that are not specified in the standard. For example, parameters can be provided from the communication apparatus 102 to the communication apparatus 101 by the communication apparatus 102 displaying a QR (registered trademark) code representing the parameters and the communication apparatus 101 reading the QR code. In this case, the provided parameters include setting items necessary for wireless communication such as an SSID, an encryption method, an encryption key, an authentication method, an AKM, a BSSID, and a MAC Address. "AKM" is an acronym for "Authentication and Key Management", and is a value indicating an authentication protocol and a key exchange algorithm used during communication. For example, if the AKM is "SAE", the communication parameters include a password for connecting to an AP or a GO supporting Wi-Fi Protected Access (WPA) 3. If the AKM is "psk", the communication parameters include a Pre Shared Key (PSK) and/or a passphrase for connecting to an AP or a GO supporting WPA2. If the AKM is "1X", the communication parameters include an ID, a password, a public key, and the like for connecting to an AP supporting WPA-Enterprise. Passwords and PSKs/passphrases are cryptographic keys used when performing authentication and key exchange in accordance with WPA, IEEE 802.11 standards, and the like. The presentation of the bootstrapping procedure may indicate whether the communication apparatus 102 is capable of displaying and reading a QR code. In addition, the presentation of the Bootstrapping procedure may indicate whether an NFC tag is supported. In addition, the presentation of the bootstrapping procedure may indicate whether a passphrase can be displayed as a character string, or whether a passphrase can be input as a character string. In addition, the presentation of the Bootstrapping procedure may indicate whether a numerical value can be displayed or input. In addition, the presentation of the Bootstrapping procedure may indicate whether the parameter exchange processing can be triggered by a button. In addition, the presentation of the Bootstrapping procedure may indicate other methods. For example, whether the exchange of parameters for using a PASN specified in WFD can support a method for passing the parameters through a method not specified in WFD can be indicated. Additionally, whether the parameters can be exchanged through a completely different method than those described above may also be indicated. If the communication apparatus 101 and the communication apparatus 102 use PASN, the parameters for using PASN include the public keys and the like of the respective apparatuses. The methods for exchanging the PASN parameters through a method not specified in WFD include, for example, a method using Bluetooth or the like. In addition, the methods for exchanging the PASN parameters through a method not specified in WFD may include a method for temporarily activating AP and STA functions, establishing a connection using the functions, and exchanging the parameters for the WFD connection. It is assumed here that the communication apparatus 102 provides the parameters to the communication apparatus 101 by having the QR code displayed and read. In this case, the communication apparatus 102 transmits a Bootstrapping Response including information indicating that the QR code is to be displayed to the communication apparatus 101 (step S1102). In this present processing example, the communication parameters are determined as being provided from the communication apparatus 102 to the communication apparatus 101 by the communication apparatus 102 displaying a QR code corresponding to the connection parameters and the communication apparatus 101 reading the QR code. Note that the communication apparatus 101 indicates a specific procedure through a Bootstrapping Request in step S1101, and the communication apparatus 102 may indicate only whether to use the specific procedure in a Bootstrapping Response in S1102.

The communication apparatus 101 and the communication apparatus 102 exchange the parameters using the determined procedure (step S1103). The communication apparatus 101 and the communication apparatus 102 then perform GO Negotiation to determine which is to operate as the GO and the frequency channel on which the GO operates (step S1104). At this time, the communication apparatus 101 and the communication apparatus 101 may execute PASN according to the parameters exchanged through the Bootstrapping to authenticate each other. It is assumed here that the communication apparatus 101 functions as the GO, and the communication apparatus 102 functions as the CL. The communication apparatus 101, which functions as the GO, then starts sending the Beacon frame (step S1105). The communication apparatus 102 operating as the CL sends a Probe Request frame to connect to the communication apparatus 101 operating as the GO (step S1106). Upon receiving the Probe Request frame, the communication apparatus 101 returns a Probe Response frame as a response thereto (step S1107). Note that the Probe Request frame may be an ML Probe Request frame including a Multi-Link Element indicating that multi-link is supported. The Probe Response frame may also be an ML Probe Response frame including a Multi-Link Element. Upon receiving the Probe Response frame, the communication apparatus 102 sends an Authentication frame (SAE Commit) (step S1108). Upon receiving the Authentication frame (SAE Commit), the communication apparatus 101 returns an Authentication frame (SAE Commit) (step S1109). Upon receiving the Authentication frame (SAE Commit), the communication apparatus 102 sends an Authentication frame (SAE Confirm) (step S1110). Upon receiving the Authentication frame (SAE Confirm), the communication apparatus 101 returns an Authentication frame (SAE Confirm) (step S1111). Upon receiving the Authentication frame (SAE Confirm), the communication apparatus 102 sends an Association Request frame (step S1112). Upon receiving the Association Request frame, the communication apparatus 101 returns an Association response frame (step S1113). Note that a 4WHS may be executed after this. Through the sequence described above, a connection is established between the communication apparatus 101 and the communication apparatus 102, which can then exchange data with each other.

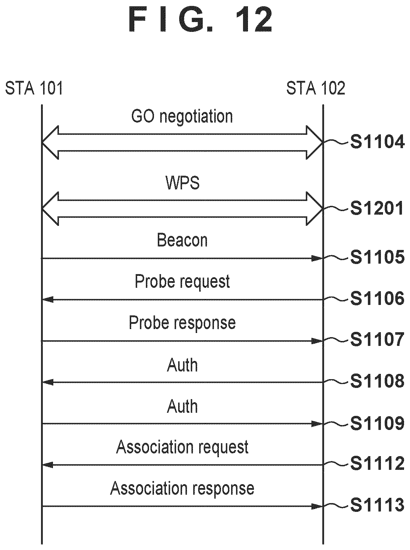

FIG. 12 illustrates an example of the flow of processing when Bootstrapping is not used to exchange the parameters used for communication. The processing of FIG. 12 can be executed when, for example, either the communication apparatus 101 or the communication apparatus 102 supports only WFD R1. The processing may also be executed when both the communication apparatus 101 and the communication apparatus 102 support both WFD R1 and WFD R2. The processing may also be executed the SDF sent by the communication apparatus 101 or the communication apparatus 102 indicates that parameter exchange through WFD R2 is not supported. The processing may also be executed, for example, when the communication apparatus 101 has discovered the communication apparatus 102 by receiving an SDF sent from the communication apparatus 102, but cannot support the indicated Bootstrapping. For example, if the communication apparatus 101 supports NFC tags and pressing a button, and the communication apparatus 102 supports NFC tags, pin code input, and passphrase input, there is no bootstrapping procedure that can be used to exchange the parameters. Accordingly, in this case, parameters can be exchanged between the communication apparatus 101 and the communication apparatus 102 through WFD R1. At this time, the communication apparatus 101 may send a Probe Request frame including the P2P IE to confirm whether the communication apparatus 102 supports WFD R1. In response, the communication apparatus 102 returns a Probe Response frame including the P2P IE to the communication apparatus 101, which enables the communication apparatus 101 to confirm whether the communication apparatus 102 supports WFD R1. In FIG. 12, processes that are the same as those illustrated in FIG. 11 are given the same reference signs, and will not be described. Note that in step S1104, because the GO Negotiation is executed in accordance with WFD R1, the PASN is not executed in parallel, and only (i) whether the communication apparatus 101 or the communication apparatus 102 operates as the GO and (ii) the frequency channel on which the GO operates are determined.

The communication apparatus 101 and the communication apparatus 102 perform WPS for parameter exchange after the GO Negotiation (step S1201). The parameters exchanged through WPS include setting items necessary for wireless communication such as an SSID, an encryption method, an encryption key, an authentication method, an AKM, a BSSID, and a MAC Address.

### Screen Display Examples

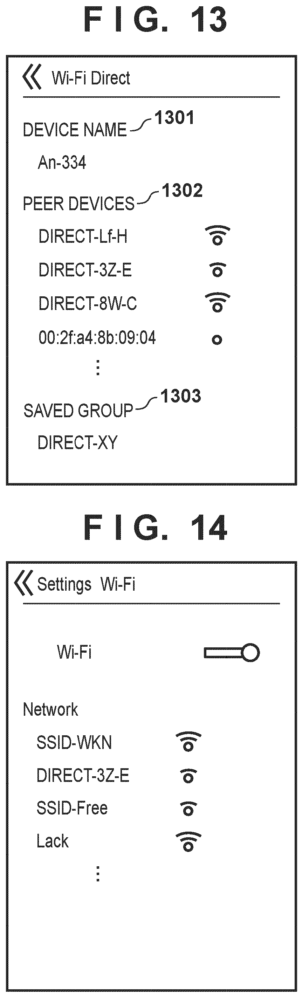

Examples of screens in which the communication apparatus displays a list of other communication apparatuses that are connection destination candidates through the output unit 205 in S1006 of FIG. 10 will be described next with reference to FIGS. 13 to 22.

A device name 1301 of the apparatus itself, a list 1302 of device names or P2P Device Addresses of other communication apparatuses (peer devices) serving as connection destination candidates, and a saved group name 1303 are displayed in the screen example illustrated in FIG. 13. In the example in FIG. 13, the device name 1301 of the communication apparatus itself is indicated as "An-334". The other communication apparatuses serving as connection destination candidates are indicated as "DIRECT-Lf-H", "DIRECT-3Z-E", "DIRECT-8W-C", and "00:2f:a4:8b:09:04" in the list 1302 of peer devices. Note that "DIRECT-Lf-H", "DIRECT-3Z-E", and "DIRECT-8W-C" are device names, and "00:2f:a4:8b:09:04" is a P2P Device Address. Here, when one other communication apparatus is detected through a plurality of frames, the device name of that one other communication apparatus is displayed as a single device in the list 1302 of peer devices. In FIG. 13, for example, when both the SDF and the Probe Request frame/Probe Response frame/Beacon frame are received from the device "DIRECT-Lf-H", that device is displayed as a single device. In other words, since detection through WFD R1 and detection through WFD R2 are performed through separate systems, it is possible that the device "DIRECT-Lf-H" will be detected as two separate devices. However, in the present embodiment, the frames used during these detections are analyzed to identify that one device has been detected through the two systems, and the frames are displayed as a single device instead of as two separate devices. For example, when device names are uniquely assigned to the respective apparatuses, whether the apparatuses detected in accordance with WFD R1 and WFD R2 are identical apparatuses can be determined using only the device names included in the respective frames. On the other hand, if the device name can be assigned as desired and it is possible that the same device name is assigned to different apparatuses, the identity of the apparatuses can be determined by determining whether the address information of the source of the frame is the same in addition to the device name.

The user of the communication apparatus can select a device as a connection destination by tapping one of the device names in the peer device list 1302. Upon accepting the selection of the device as the connection destination, the communication apparatus can perform the connection processing with that device through a sequence such as that illustrated in FIG. 11 or FIG. 12. The name of a P2P group that the communication apparatus has joined in the past or the name of a device that the communication apparatus has connected to in the past is displayed in the field of the saved group name 1303. The communication apparatus can identify the connection destination device by accepting the selection of the P2P group or the device name displayed here. Note that the communication apparatus may display detailed information about the device selected from the list 1302 of peer devices or the saved group name 1303. In this case, when the device is selected, the communication apparatus may display a screen (item) for enabling the user to select whether to display detailed information of the device or to connect to the device. Although the foregoing describes an example in which the device name or the P2P Device Address is displayed, the configuration is not limited thereto. For example, a URL, Model name, Model number, serial number, UUID, or P2P Interface Address may be displayed for the other communication apparatuses serving as connection destination candidates. Additionally, for example, the device name may be displayed when the device name is included in each of the frames when the other communication apparatus is detected, and the P2P Device Address may be displayed when the device name is not included in those frames. Additionally, a reception strength when a signal from the device is detected may be displayed for each discovered device. Note that the reception strength of the signal for each link may be displayed when the other communication apparatus serving as a connection destination candidate is sending the Beacon frame over a plurality of links.

FIG. 14 illustrates an example of a case where the SSID is displayed in the list of other communication apparatuses serving as connection destination candidates. In this case, when the Wi-Fi function is enabled, the communication apparatus displays the SSID indicated by a WFD device capable of a connection in the list of SSIDs indicated by the APs capable of a connection. Note that the communication apparatus displays the WFD device detected using an SSID that is the same for both WFD R1 and WFD R2 as a single device. The user of the communication device can select the device that operates using that SSID as the connection destination by selecting the SSID. Then, the communication apparatus can perform connection processing with the selected device. Note that the communication apparatus may display detailed information of the selected device. In this case, when the device is selected, the communication apparatus may display a screen (item) for enabling the user to select whether to display detailed information of the device operating using the SSID or to connect to the device.

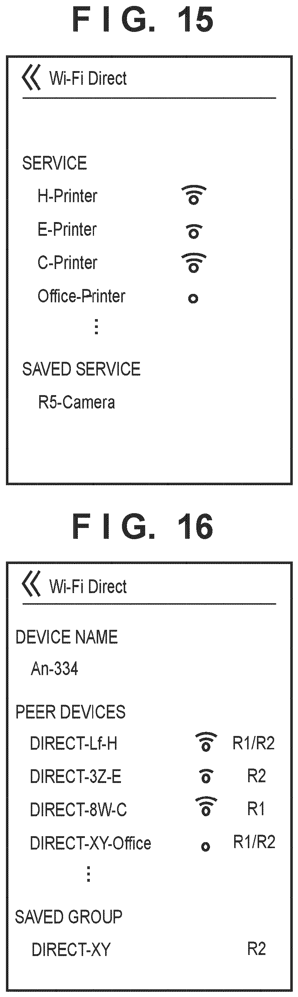

FIG. 15 illustrates an example of a case where the service name is displayed in the list of other communication apparatuses serving as connection destination candidates. In this case, the communication apparatus displays a list of service names that can be provided by other communication apparatuses in the vicinity. Note that when the communication apparatus detects a single other communication apparatus that provides a service having the same service name for both WFD R1 and WFD R2, the communication apparatus displays only that single service name that is the same. Note also that when a service having a plurality of different service names is provided by a single other communication apparatus, the service is displayed as separate services. In other words, a service name is displayed when another communication apparatus for which the service name and the apparatus that provided the service match is detected in both WFD R1 and WFD R2, and a service name is displayed when either the service name or the apparatus providing the service is different. For example, when service names are uniquely assigned to the respective apparatuses, whether the apparatuses detected in accordance with WFD R1 and WFD R2 are identical apparatuses can be determined using only the service names included in the respective frames. On the other hand, if the service name can be assigned as desired and it is possible that the same service name is assigned to different apparatuses, the identity of the apparatuses can be determined by determining whether the address information of the source of the frame is the same in addition to the service name. Additionally, for example, when the service name and the device name are the same, whether a plurality of information items are the same in the frames detected through WFD R1 and WFD R2, respectively, may be determined, regardless of the address information. In this case, the communication apparatus may determine that the same apparatus has been detected through both WFD R1 and WFD R2 in response to a predetermined number (a plurality) of information items being the same in those frames. The communication apparatus may also display a service that was used in the past as a saved service. The user of the communication device can select the device that provides the service as the connection destination by selecting the service name. Then, the communication apparatus can perform connection processing with the selected device. Note that the communication apparatus may display detailed information of the selected service. In this case, when the device is selected, the communication apparatus may display a screen (item) for enabling the user to select whether to display detailed information of the service or to connect to the device.

FIG. 16 illustrates an example of a case where, in the list of other communication apparatuses serving as connection destination candidates, whether each device supports WFD R1 or WFD R2 is displayed. For example, "R1", indicating that WFD R1 is supported, and "R2", indicating that WFD R2 is supported, are displayed next to the device name. Note that in a screen display such as that illustrated in FIG. 13, when a specific device is selected and the detailed information is referenced, whether the device supports WFD R1 or WFD R2 may be displayed. In addition, the communication apparatus may display, next to the name of a device connected to in the past, a format that was used when that device was connected to in the past. The example in FIG. 16 indicates that the device "DIRECT-XY" has been connected to in the past in accordance with WFD R2.

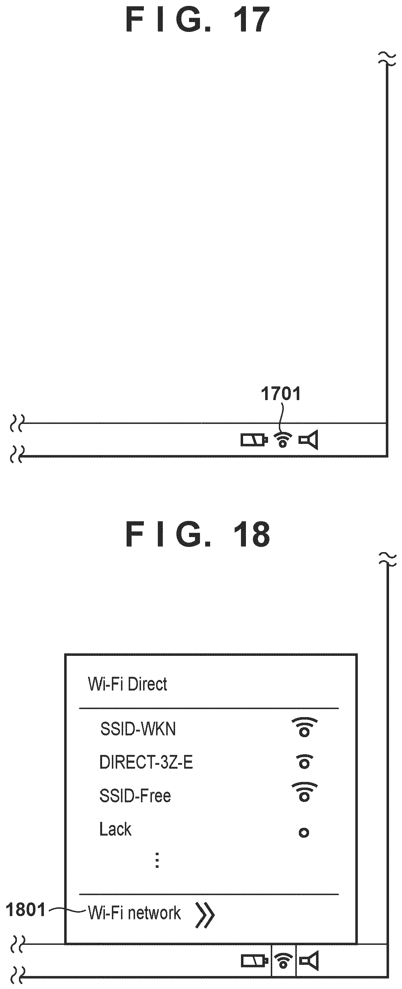

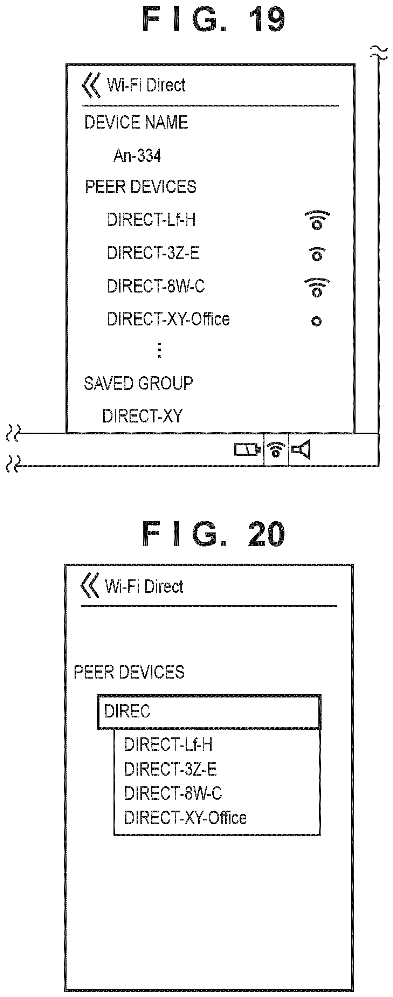

FIGS. 17 to 19 illustrate an example of a case where Wi-Fi settings are displayed as a pop-up. As illustrated in FIG. 17, the user of the communication apparatus can select a radio wave mark 1701 displayed by an icon. When the icon is selected, the communication apparatus can display the Wi-Fi settings as a pop-up as illustrated in FIG. 18. Here, a list of SSIDs detected by the communication apparatus are indicated, as illustrated in FIG. 14. In this case, the SSID indicated by the WFD device can also be included in the list and displayed, as described with reference to FIG. 14. Here, when an item 1801 displayed as "Wi-Fi Direct" is selected, the communication apparatus can display a list of device names that can be connected through WFD, as illustrated in FIG. 19.

FIG. 20 illustrates an example of a case where connection destination candidates are displayed as a list when the user inputs the name of a connection destination device. For example, when the letters up to "DIREC" are input as the connection destination, the communication apparatus can display a list of device names that begin with "DIREC" (or that include "DIREC" as part of the name). The device names displayed here are the same as in the example in FIG. 13. In other words, when a single device is detected through both WFD R1 and WFD R2, the communication apparatus displays a single device name, instead of displaying two device names according to the respective detection results.

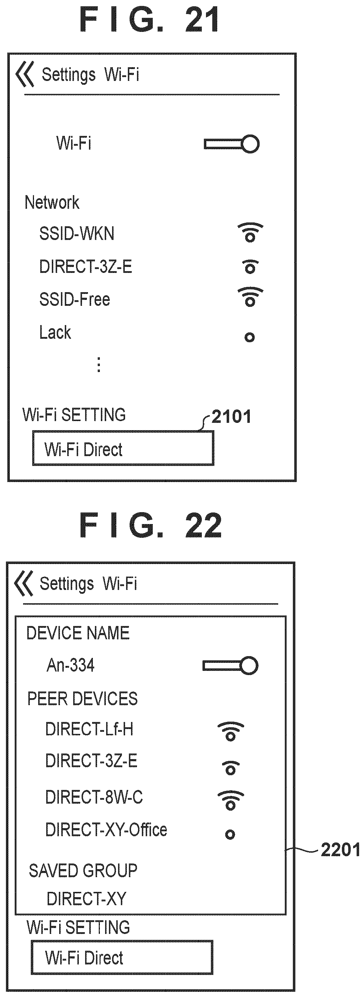

FIGS. 21 and 22 illustrate an example of a case where a Wi-Fi Direct setting screen is displayed as a pop-up. For example, when an item 2101 displayed as "Wi-Fi Direct" is selected in the screen illustrated in FIG. 21, the communication apparatus displays a screen such as that illustrated in FIG. 13 through a pop-up 2201 as illustrated in FIG. 22.

As described above, in the present embodiment, when the communication apparatus detects the same other communication apparatus using WFD R1 and WFD R2, the frames of those respective systems can be specified as having been sent from the same other communication apparatus by analyzing the frames at the time of the detection. Then, according to the result of the specifying, the single communication apparatus can be prevented from being presented to the user as a plurality of apparatuses, and the user can easily select the communication apparatus to serve as the connection destination.

The foregoing embodiment described a sequence in which the communication apparatus discovers another communication apparatus to serve as a communication partner on the basis of two different wireless frames, namely WFD R1 and WFD R2. However, this is merely one example, and the same applies when a third method is used, such as executing at least one of a search for a partner apparatus and connection processing using a wireless frame not used in WFD R1 and WFD R2. In other words, even if a third method is used, the communication apparatus can determine whether a single communication method has been detected in multiple as two or more of the plurality of methods by analyzing a wireless frame used in each of the plurality of methods. Then, on the basis of the determination result, the communication apparatus presents another communication apparatus that is a connection destination candidate to the user (for example, through a screen display or audio output), and the user can then efficiently select the connection destination apparatus. The third method can be, for example, a method adopted in the future as a successor to WFD R2. Furthermore, although the foregoing has described an example in which WFD R1 and WFD R2 are used, any combination of methods can be used, e.g., two methods including WFD R2 and the third method, or WFD R1 and the third method. The third method and a fourth method, each of which may be adopted as a future standard, may also be used. In other words, although the foregoing embodiment described an example in which WFD R1 and WFD R2 are used so as to handle current WFD standards, it is also possible to use neither of these standards. The method according to the foregoing embodiment can be applied in any environment in which other communication apparatuses are detected using any two or more methods which use different wireless frames. The information used in an infrastructure connection may also be used to determine the identity of the communication apparatuses detected by a plurality of methods. For example, a single communication apparatus may be determined to have been detected in duplicate on the basis of the result of analyzing a frame received as an AP or an STA.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, and a memory card.

While the present disclosure has been described with reference to exemplary embodiments, it is to be understood that the present disclosure is not limited to the disclosed exemplary embodiments. The scope of the present invention is defined by the appended claims.

## Claims

1. A communication apparatus that communicates a wireless frame compliant with a Wi-Fi Direct, WFD, standard, the communication apparatus comprising:
first detection means (301) for performing a first detection of an other communication apparatus according to a first method of searching for a partner apparatus for communication using a first wireless frame, the first wireless frame being defined by the WFD standard;
second detection means (302) for performing a second detection of an other communication apparatus according to a second method of searching for the partner apparatus using a second wireless frame, the second wireless frame being defined by the WFD standard and not being used in the first method;
determination means (304) for determining whether the same apparatus has been detected in the first detection and the second detection by analyzing the first wireless frame and the second wireless frame; and
output means (205) for outputting information about the other communication apparatus detected by the first detection and the second detection, the output means outputting the information indicating the apparatus as a single apparatus in a case where the same apparatus has been detected in the first detection and the second detection.

2. The communication apparatus according to claim 1,
wherein the first wireless frame is at least one of a Probe Request frame and a Probe Response frame, and the second wireless frame is a Service Discovery Frame (SDF).

3. The communication apparatus according to claim 1,
wherein the first wireless frame is at least one of a Probe Request frame, a Probe Response frame, and a Beacon frame, and the second wireless frame is a Service Discovery Frame, SDF.

4. The communication apparatus according to any one of claims 1 to 3,
wherein the determination means determines that the same apparatus has been detected using the first wireless frame and the second wireless frame, based on sources of frames included in each of the first wireless frame and the second wireless frame having the same address.

5. The communication apparatus according to claim 4,
wherein the output means outputs a screen including an address of the other communication apparatus detected through the first detection and the second detection.

6. The communication apparatus according to any one of claims 1 to 5,
wherein the determination means determines that the same apparatus has been detected using the first wireless frame and the second wireless frame, based on sources of frames included in each of the first wireless frame and the second wireless frame having the same device name.

7. The communication apparatus according to claim 6,
wherein the output means outputs a screen including a device name of the other communication apparatus detected through the first detection and the second detection.

8. The communication apparatus according to any one of claims 1 to 7,
wherein the determination means determines that the same apparatus has been detected using the first wireless frame and the second wireless frame, based on service names provided by a device that is a source of frames included in each of the first wireless frame and the second wireless frame being the same service name.

9. The communication apparatus according to claim 8,
wherein the output means outputs a screen including a service name provided by the other communication apparatus detected through the first detection and the second detection.

10. The communication apparatus according to any one of claims 1 to 9,
wherein the determination means determines that the same apparatus has been detected using the first wireless frame and the second wireless frame, based on sources of frames included in each of the first wireless frame and the second wireless frame having the same Universal Unique Identifier, UUID.

11. The communication apparatus according to claim 10,
wherein the output means outputs a screen including a UUID of the other communication apparatus detected through the first detection and the second detection.

12. A control method executed by a communication apparatus that communicates a wireless frame compliant with a Wi-Fi Direct, WFD, standard, the control method comprising:
performing (S1002) a first detection of an other communication apparatus according to a first method of searching for a partner apparatus for communication using a first wireless frame, the first wireless frame being defined by the WFD standard;
performing (S1003) a second detection of an other communication apparatus according to a second method of searching for the partner apparatus using a second wireless frame, the second wireless frame being defined by the WFD standard and not being used in the first method;
determining (S1004) whether a same apparatus has been detected in the first detection and the second detection by analyzing the first wireless frame and the second wireless frame; and
outputting (S1006) information about the other communication apparatus detected by the first detection and the second detection, the information indicating the apparatus as a single apparatus when the same apparatus has been detected in the first detection and the second detection.

13. A computer program comprising instructions which, when the program is executed by a computer, cause the computer to carry out the control method of claim 12
